Europäisches Patentamt

European Patent Office

Office européen des brevets

(19)

(11) Publication number : **0 198 810**
**B1**

(12) # EUROPEAN PATENT SPECIFICATION

(45) Date of publication of patent specification :
07.03.90

(21) Application number : 86850135.4

(22) Date of filing : 15.04.86

(51) Int. Cl.⁵ : **B 05 B 15/02**, B 01 D 47/06,
**B 05 B 7/06**

(54) Arrangement in a contact reactor.

(30) Priority : 16.04.85 SE 8501851

(43) Date of publication of application :
22.10.86 Bulletin 86/43

(45) Publication of the grant of the patent :
07.03.90 Bulletin 90/10

(84) Designated contracting states :
AT BE CH DE FR GB IT LI LU NL SE

(56) References cited :
EP—A— 0 079 081
DE—A— 2 823 253
SE—B— 418 693
SE—B— 428 096
US—A— 2 612 405
US—A— 2 613 737
US—A— 3 984 054
US—A— 4 136 828

(73) Proprietor : Fläkt Aktiebolag
Sickla Allé 13
S-131 34 Nacka (SE)

(72) Inventor : Johansson, Lars-Erik
Fornvägen 1
S-352 50 Växjö (SE)
Inventor : Jacobsson, Per-Gunnar
Violvägen 8
S-352 51 Växjö (SE)

(74) Representative : Lindblom, Erik J.
Skördevägen 88
S-122 35 Enskede (SE)

Note : Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid (Art. 99(1)
European patent convention).

## Description

### Technical Field

The present invention refers to an arrangement in a contact reactor as stated in the preamble of claim 1.

The used media-mixing nozzle assembly, incorporating one or more nozzles, belongs to the category of nozzle assemblies which are referred to as internal mixing nozzle assemblies.

### Background Prior Art

Various forms of nozzle assemblies, and particularly media-mixing nozzle assemblies adapted to the conditions which prevail in a contact reactor and provided with one or more nozzles, are known to the art.

As an example of the known prior art reference can be made to such nozzle assemblies as those constructed to produce a finely atomized liquid mist through nozzles incorporated in the nozzle assembly, such nozzle assemblies being designated two-media-assemblies, since such assemblies are used to mix together two media, liquid with gas. In order to atomize the liquid, the gaseous medium, which is accelerated under expansion, is permitted to act upon a liquid surface oriented upstream or downstream of the actual nozzle itself. This liquid surface is given a velocity which deviates substantially from the velocity of the gaseous medium, and is normally much lower than the velocity of the gaseous medium.

Nozzle assemblies of this kind can be divided principally into two different categories, depending upon the manner in which they operate. The two categories are distinguished from one another by whether the two media to be mixed meet within the nozzle assembly itself or substantially externally thereof. Consequently, the first category is designated « internal mixing nozzle assemblies » while the second category is designated « external mixing nozzle assemblies ».

The present invention relates to an arrangement which can be used to particular advantage in an internal mixing nozzle assembly. An example of such an internal mixing nozzle assembly is described and illustrated in European Patent Application No. 82110320.7, published under No. A2 0 079 081.

The method and apparatus illustrated and described in the Swedish Patent Specification 428 096, deriving from the US Patent Application No. 488, 472, filed 15 July 1974, also form part of the prior art.

In the technique taught by this specification, a secondary fluidum forms around a primary fluidum exit aperture a buffer which prevents the fluid from flowing back into contact with a body incorporating the aperture, in a manner to deposit solid substances on the body.

The primary fluid passage is said to be positioned co-axially in relation to a passage for secondary fluidum surrounding the primary fluid passage, causing the flow of secondary medium to form a divergent flow immediately downstream of the passage.

The apparatus of this prior art publication is particularly constructed for handling radioactive waste products containing a solution of radioactive substances in slurry form, or solid radioactive substances suspended in a slurry.

The slurry of radioactive waste is introduced into a roasting furnace at a relatively high velocity, with the aid of an injection nozzle located at a distance from the location of a fluid bed.

The known prior art in the present context also includes the apparatus described and illustrated in the US Patent Specification No. 2,613,737.

This specification describes an oil-burner nozzle provided with a feed pipe for supplying oil to a chamber in which the oil is mixed with air. The resultant air/oil mixture is fed to a chamber having a plurality of apertures distributed around a hemi-spherical body.

Secondary air is supplied through a circular slot oriented around the hemi-spherical body, and consequently when the secondary air exits through the slot the air takes a cyclindrical configuration, which is caused immediately to diverge as a result of the air/oil mixture exiting through the apertures in the hemi-spherical body.

By supplying secondary air in this way, it is possible to eliminate the deposit of soot on the hemi-spherical body in a fire hearth.

### Summary of the Present Invention

#### Technical problem

When a jet of gas and/or liquid is passing through a gas it is producing secondary movements in the gas. The gas adjacent the jet will move along the jet and partly be entrained in the jet.

At the orifice of the nozzle where the jet enters the surrounding gas this will cause a lowering of the pressure because some gas is transported away. This under-pressure will generate vortices adjacent the nozzle.

If the jet contains particles and/or drops of liquid some of these will leave the jet together with a part of the entrained gas and return to the surroundings of the nozzle with the generated vortices, so called back-mix vortices, therewith creating the risk of deposition of dry or semi-dry material on the body incorporating the nozzle orifice.

This deposition is very often highly undesired. The deposits will impair the function of the nozzle because they change the aerodynamic situation at the orifice. If this is critical, the nozzles must be cleaned very often. This is e.g. the case in a contact reactor, in which a gaseous medium laden with gaseous contaminants is contacted with a fine mist of liquid containing a suspended solid absorbent which then is separated from the cleansed gaseous medium as a dry powder. Naturally the task of cleaning the nozzle assemblies at given intervals is both troublesome and tedious.

If the size of the droplets in the mist is too large, the residence time in the reactor will not be sufficient to allow a complete vaporization of the liquid and hence wet material will reach the walls of the reactor and form deposits thereon. This will in a short time lead to an enforced close down of the equipment for extensive cleaning.

It is therefore a technical problem, in a contact reactor, to provide simple means, which reduce undesirable vortices adjacent the nozzle orifices, or at least causes the vortices to form somewhat downstream the nozzle orifices. Moved away from the nozzle orifice they act as a part of the desired mixing process in the reactor.

A further technical problem resides in the provision of a multi-nozzle media-mixing nozzle assembly having simple means which prevents the formation of deposits in the near surroundings of the nozzle orifices.

Another technical problem resides in the provision of a simple media-mixing nozzle with the ability to regulate the supply of absorbent to a contact reactor while maintaining a desired size of the droplets in the mist and still in a satisfactory way prevent deposition of adsorbent adjacent the nozzle orifices.

A qualified technical problem resides in provision of simple means that can be added to already existing nozzle assemblies thereby solving problems with depositions, without an extensive reconstruction of the nozzle assemblies.

## Solution

The present invention relates to an arrangement as stated in the preamble of Patent claim 1.

In accordance with a particularly advantageous embodiment of the invention, the nozzle assembly is constructed to exhibit the features stated in the characterizing part of said claim 1.

Further modifications of embodiments within the scope of the present invention are stated in the subclaims.

## Advantages

Those advantages primarily associated with an arrangement according to the present invention reside in the creation of conditions which ensure the effective mixture of two media supplied to the media-mixing nozzle assembly at an overpressure, and with which the resultant mixture is able to leave the exit orifice of a respective nozzle and still prevent or reduce, with the aid of simple means, the recycling of the medium mixture to the wall surface of the nozzle assembly under the influence of secondary vortices adjacent the exit orifice.

In this way, the deposition of partly dried absorbent on the nozzle assembly or its attachments is totally, or almost totally, avoided in the contact reactor.

## Brief Description of the Drawing

An exemplifying embodiment exhibiting features characteristic of the invention will now be described in detail with reference to the accompanying drawing, in which

Figure 1 illustrates schematically and partially in section a dry-gas cleaning plant of principally known construction ;

Figure 2 illustrates in side view and partially in section a known media mixing nozzle assembly of the internal mixing type, and further illustrates in a slightly enlarged view one of the nozzles of said nozzle assembly, and further illustrates deposits of partially dried absorbent in the vicinity of the nozzle caused by secondary vortices ;

Figure 3 is a sectional view of means according to the invention arranged around a nozzle assembly of the kind illustrated in Figure 2 ;

Figure 4 is a perspective view of an upper part of a contact reactor, incorporating a multi-nozzle assembly and means according to the invention, and also shows in more detail part of the means located in the immediate proximity of the lefthand nozzle of the assembly ; and

Figure 5 is a sectional view of a multi-nozzle assembly exhibiting a plurality of nozzle exit orifices and illustrates a modification to the exit orifice of one nozzle.

## Description of an Embodiment at Present Preferred

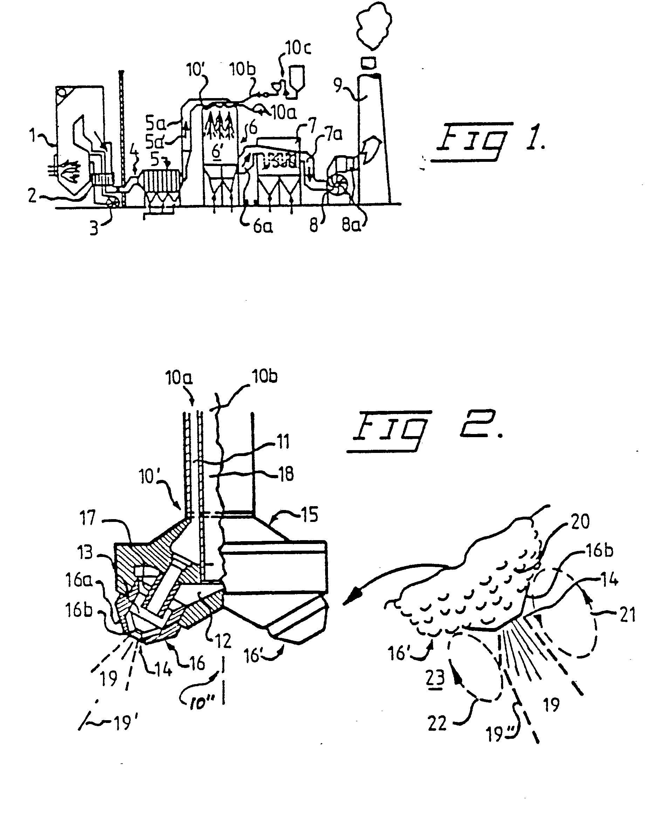

Figure 1 illustrates schematically, in side view and partly in section, for the sake of illustration, a boiler with a flue gas cleaning plant.

The plant comprises a boiler 1, an air preheat exchanger 2, a combustion air fan 3, electrostatic precipitator 5, a contact reactor 6, a bag filter 7, an induced draft fan 8 and a stack 9.

The flue gases are conducted through a conduit or channel 4 to the electrostatic dust separator 5, which is connected to the contact reactor by a conduit or channel 5a. A contaminated medium 5a' is fed to the contact reactor through the channel 5a. The contaminants contained in the medium 5a' may be dust particles, hydrogen chloride, sulphur dioxide, etc.

Arranged in the upper part of the contact reactor 6 are a number of media-mixing nozzle assemblies 10' which are effective in mixing a first medium, in the form of air entering through a pipe 10a, with a second medium, in the form of an aqueous suspension of lime particles entering through a pipe 10b connected to a water/lime mixing device 10c.

The media-mixture prepared in the mixing nozzle assembly 10' is fed therefrom to the contact reactor and introduced to the contaminated medium 5a', whereupon the lime reacts absorp- tively with the contaminants or impurities present in the contaminated medium.

The cleansed medium passes from the contact reactor 6 to a bag filter 7, via a channel 6a. Medium cleansed in the bag filter 7 is passed through a channel 7a to a fan 8, which forces the cleansed medium through a channel 8a and out through a smoke stack or chimney 9.

The present invention relates to an arrangement which is particularly useful in conjunction with a media-mixing nozzle assembly 10' of the kind particularly intented for use in a contact reactor 6 intended for cleaning a contaminated medium passing through the channel 5a. This supply is effected partly through a pipe 10b which conducts the aforementioned water/absorbent suspension, and partly through a pipe 10a through which gas or a gaseous mixture, preferably air, is conveyed, so that the two media can be mixed effectively in a mixing chamber and sprayed over the interior 6' of the contact reactor 6, via a nozzle or outlet.

Figure 2 illustrates a known media-mixing nozzle assembly 10' constructed in accordance with the principle of an internal mixing nozzle assembly. The nozzle assembly 10' comprises a symmetrically formed central body 15, which is provided with a chamber or cavity 12 into which there discharges a central riser pipe 18 and a rotational-symmetric atomizing zone or chamber 13 into which there discharges a pipe or channel 11 connected to the pipes 10b and 10a respectively. The illustrated nozzle assembly 10' is provided with three symmetrically arranged nozzles, so-called mist nozzles, of which two 16, 16' are shown in the Figure. Each nozzle 16 comprises a circular-tubular housing 16a and presents an outlet orifice 14, which has a diameter of between 1 and 10 mm at its outer end. A tubular gas nozzle 17 which communicates with an airfeed conduit 11 connected to the pipe 10a is arranged upstream of the outlet orifice 14.

When liquid (water/lime suspension) is fed to the nozzle assembly from the pipe 10b, via the pipe 18, the atomizing zone 13 and the chamber 12 become filled with liquid. The liquid is conveyed at a pressure of between 2 and 12 bars. When a gaseous medium under sufficiently high pressure, i.e. a pressure higher than the pressure of the liquid, is supplied to the gas nozzle 17, a gas jet is generated through the atomizing zone 13. Thus, there is present in the narrowest section of the mist nozzle, i. e. in the region of its exit orifice 14, a two phase stream where the gaseous medium atomizes the liquid and forms a finely divided mist-jet or medium-jet 19.

The jet 19 leaves the exit orifice 14 while subtending an angle of about 30˙ between the centre line 10" of a complete nozzle assembly and the centre line 19' of the jet 19.

Thus narrow mist-jets exit from their respective exit orifices, these jets being uniformly distributed around a circular line.

The following description will be made solely with respect to the jet 19 issuing from the exit orifice 14, since the conditions for all remaining jets and exit orifices are the same as those for the jet 19 and exit orifice 14.

One problem associated with the nozzle assembly according to Figure 2 is that the finely divided liquid issued through the orifice 14 at a high velocity and at a pressure above atmospheric, causes the occurrence of secondary turbulence or back-mix vortices 21, 22 in the region 16b around the orifice 14, which in practice results in conglomeration of particles dissolved or suspended in the liquid conglomerating on the nozzle assembly in a slightly dried state immediately adjacent the exit orifice 14. This particle agglomeration radically changes the aerodynamic conditions around the nozzle and thus impairs the efficiency of the nozzle assembly.

Naturally, the task of cleaning the nozzles and the nozzle assembly of such agglomerations at given intervals is both troublesome and tedious.

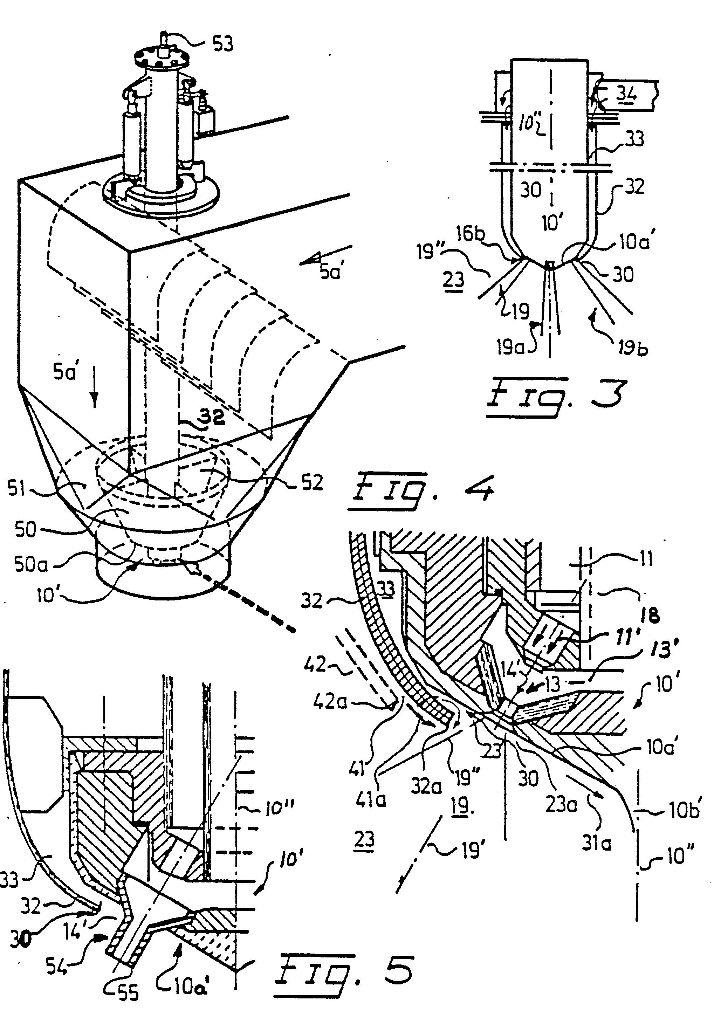

Figure 3 is a sectional view of an arrangement according to the present invention which is intended to be incorporated in the contact reactor and to surround a complete medium-mixing nozzle assembly comprising a plurality of nozzles each provided with a respective exit orifice, said orifices being oriented in the manner illustrated in Figure 2. The nozzle assembly is adapted to cause a bundle of jets 19, 19a, 19b to issue from the exit orifices of respective nozzles.

As shown in Figure 4, the substantially cylindrical wall of the nozzle assembly terminates at the bottom 10a' thereof in a substantially rotational-symmetric form with a centrally located pointed part 10b'. The nozzles are located in the wall 10a' in the bottom of the nozzle assembly.

The first 11' and second 13' medium streams are supplied under overpressure to a mixing chamber 13 common to all nozzles in the nozzle assembly (Figure 4). The first medium 11', which is air, is permitted to pass through a channel 11, while the second medium 13', which comprises moistened lime particles or an aqueous suspension of lime particles, is supplied to the nozzle assembly through a channel 18. Both of these media are passed to the common mixing chamber or cavity 13.

A means 32 is located adjacent the exit orifice 14', and said means 32 is adapted to pass a gaseous medium along the curved wall surface 10a' of the nozzle assembly.

Figure 3 shows that the nozzle assembly 10' has a tapering external configuration, preferably a slightly conical configuration, in the proximity of the nozzle orifices and the jets of medium 19, 19a, 19b, and that a stream of air or a stream of gas is directed to converge towards the centre line 10" of the nozzle assembly through the agency of an annular slot 30 thereby intersecting the jet of medium 19. When leaving the slot 30, the air or gas stream forms an angle of about 90˙ with the geometric centre line 19' of the jet 19. Incidence angles of from 60-120˙ also lie within the scope of the invention.

It is an essential feature of the invention that each stream of medium issuing from respective nozzles exhibits a composant which is parallel with the geometric centre line 10" through a nozzle assembly which centre line normally is parallel with the direction in which the gaseous contaminated medium is fed through the contact reactor.

The angle included by the centre directional component 19' of the direction of the jet 19 and the centre line 10" through the nozzle assembly should not exceed 80°, and is preferably smaller than 60°.

The air stream issuing from the annular slot 30 forms a circularly distributed air-jet or air-curtain 31a directed towards the centre 10" of the nozzle assembly.

The air-curtain or gas-curtain 31a thus has a uniform or substantially uniform effect around the jet of medium 19 in the proximity of parts of the vortices 21 and 22 facing the nozzle exit-orifice 14'. The arrangement is preferably formed so as to displace the secondary vortices 21, 22 generated by the jet 19 in a manner to create conditions which will prevent the formation of deposits 20 on the outer wall-surface of the nozzle assembly.

In the embodiment illustrated in Figure 3, a casing 32 surrounds the outer confines of the nozzle assembly 10', so as to define therebetween a narrow channel 33 which merges with an annular slot 30, the diameter of which is somewhat larger than the diameter of the circle on which the nozzles (16, 16') causing the jets 19, 19a and 19b are located.

In this way there is formed adjacent the nozzle orifice 14' a boundary layer which converges towards the centre line 10" of the nozzle assembly 10'.

The slot 30 has a width of about 4 mm and the distance from the slot 30 to the exit orifice 14' of the adjacent nozzle causing the jet 19 is about 15 mm.

The gas leaves the slot 30 at a velocity of about 75 m/sec ; the contaminated flow of medium 23 has a velocity of about 20-25 m/sec ; and the mixed flow of media 19 has a velocity at the orifice 14' of about 250-300 m/sec.

The channel 33 is connected to a source of pressure, via a conduit 34, in a manner which enables the pressure to be regulated or held at a constant level.

The flow of gas through channel 33 and slot 30 may also consist of the contaminated medium 23.

In conjunction with the embodiment illustrated in Figure 4, it is proposed by way of example that the air pressure in the pipe or channel 11 shall be capable of reaching 12 bars, while the pressure of the liquid in the pipe or channel 18 shall be capable of reaching 8 bars, although the air pressure should always be higher than the pressure of the liquid in the channel 18.

As illustrated in Figure 4, it shall be possible to generate the boundary layer 31a by either adjusting the speed of the gas through the slot 30 or by maintaining the gas flow at a constant velocity. The boundary layer 31a is generated by creating adjacent the exit orifice 14' of the nozzle, with the aid of means herefor, a pressure which is higher than the pressure prevailing downstream of the orifice and adjacent the jet of medium 19.

The means 32 and the slot 30 are arranged to generate a boundary layer close to the nozzle orifice through which the jet 19 exits, or alternatively in the close vicinity of a number of orifices through which respective jets exit.

Although in the Figure 4 embodiment the aforesaid means has the form of an annular slot 30 which encircles all nozzle exit orifices of the nozzle assembly 10' and the jets issuing from said orifices, it will be understood that the means 32 may have the form of an annular slot arranged to encircle solely one nozzle exit orifice and the jet issuing therefrom.

Another possibility is that the surface defining the slot is composed of a plurality of preferably uniformly spaced circular arcs, with each arc located concentrically with a respective nozzle.

The gas flow through the slot 30 is chosen to comprise an air stream effective to form a circular air curtain 31a having velocity vectors directed towards the geometric centre line 10" of the nozzle assembly 10'.

In the Figure 4 embodiment, the exit orifice 14' is located in the bottom wall 10a' of the nozzle assembly, although it will be understood that it also lies within the concept of the invention to locate the exit orifice, or exit orifices, slightly outside the bottom wall 10a' of the nozzle assembly. In this latter case, the orifice 14' is preferably extended with the aid of a thin-walled tubular element, not shown.

As shown in Figure 4, the bottom wall 10a' of the nozzle assembly 10' located adjacent the nozzle orifice 14' has a substantially rotational-symmetric form and presents a centrally located pointed part 10b' adapted to cause the air stream 31a adjacent the nozzle assembly 10' to be deflected towards the directions of the geometric centre line 10".

As shown in the figure, the air curtain is intended to flow substantially uniformly towards the centre 10" of the cylindrical wall and therewith form a substantially uniform boundary layer 31a which is effective over the whole of the bottom wall 10a', so as to prevent the agglomeration of absorbent thereon.

The casing 32 provided with the opening is arranged to encircle the nozzle assembly 10' in a manner to form a slot 30 between the inner surface of the casing 32 and the outer surface of the bottom wall 10a' of the nozzle assembly 10', and to supply gas under overpressure through a channel 33 formed between the casing 32 and the wall of the nozzle assembly.

A further casing 42 provided with an opening 42a can be placed around the casing 32 and spaced therefrom to form a slot 41 between the inner surface of the outer casing 42 and the outer surface of the casing 32, such that gas is passed between the outer casing 42 and the casing 32.

The slot between the outer casing 42 and the casing 32 is formed at a distance from the slot 30 between the casing 32 and the bottom wall 10a' of the nozzle assembly in a direction away from the jet of medium 19, so as to form thereby a boundary layer 41a around the casing 32 in the manner described with reference to the boundary layer 31a.

The width of both the slot 30 and the slot 41 can be made adjustable, by arranging the casing 32 and optionally also the casing 42 in a manner which enables the casing or casings to be raised and lowered relative to the nozzle assembly 10'. Adjustment to the width of the slots results in an adjustment to the boundary layers 31a and 41a.

Respective slots 30, 41 may be placed in communication with a source of overpressure, with which the pressure can be regulated or held constant.

The embodiment of the nozzle assembly 10' and the casing 32 illustrated in Figure 4 can be mounted in a conical funnel 50, which in turn is embraced by a channel 51.

The funnel 50 narrows in the downstream direction, and the nozzle assemblies are located immediately downstream of the lowermost edge part 50a of the funnel 50. The funnel is provided with turbulence generating means in the form of guide vanes 52.

Contaminated medium 5a' is passed down into a constriction through the channel 51, and through the funnel 50 and past the nozzle assembly 10'.

Air is supplied to the slot of the illustrated embodiment, via a connection 53.

The actual reaction takes place downstream of the nozzle assembly 10'.

Figure 5 illustrates an alternative embodiment of a nozzle assembly 10', in which the nozzle orifice 14' is extended by means of a tubular element 54, the outermost orifice 55 of the tubular element being located slightly downstream of the slot 30.

The orifice 55 should be located at a distance which exceeds twice the width of the slot 30 of the means 32, preferably about three times said width.

In other respects the embodiment illustrated in Figure 5 is the same as that illustrated in Figure 4.

It will be understood that the invention is not restricted to the illustrated and described exemplifying embodiment and that modifications can be made within the scope of the following claims.

## Claims

1. An arrangement in a contact reactor (6), which incorporates ;
   a) a contact reactor chamber (6') ;
   b) one or a plurality of media-mixing nozzle assemblies (10') distributed in the chamber (6') ; each nozzle assembly (10') including a plurality of nozzles ;
   c) a chamber inlet (5a), through which a medium laden with gaseous contaminants is introduced into the chamber (8') ;
   d) an outlet (6a), through which cleansed medium leaves the chamber,

being effective to mix a first medium (11'), in the form of a gas or a gas mixture, with a second medium (13') in the form of a liquid/absorbent suspension, and the resultant medium mixture being· introduced into the chamber (6') through the nozzles (16), in the form of jets of medium (19), and there brought into contact with the contaminated medium, characterized in that each nozzle assembly (10') is provided, in the vicinity of the exit orifices (14') of the nozzles (16), with a means (32) which is arranged to create a converging boundary layer (31a) around said nozzle assembly (10') by directing, along a wall surface (10a'), a gas or air jet and/or curtain having a velocity vector directed towards a centre line (10") of the complete nozzle assembly (10') and intersecting respective jet of medium (19) within an angular range of 60-120 degrees, preferably within 80-100 degrees, between the centre line (19') of the respective jet of medium and the prevailing velocity vector of the boundary layer (31a), whereby recycling of said jet of medium back to the wall surface (10a') of the nozzle assembly (10') is totally or partially prevented.

2. An arrangement according to Claim 1, characterized in that the means (32) comprises a slot (30), located adjacent to but externally of all nozzles (16) in respective nozzle assembly (10') and in that the nozzles (16) in the nozzle assembly (10') are distributed circularly or substantially circularly, with substantially equal distances to the centre line (10") of the nozzle assembly (10').

3. An arrangement according to Claim 2, characterized in that the nozzles (16) in respective nozzle assembly (10') are spaced with substantially equal distances between each other.

4. An arrangement according to Claim 2, characterized in that the slot (30) is circular and has a diameter which is only slightly greater than the diameter of a circular line passing through the part of the nozzles (16) situated with the greatest distance to the centre line (10") of the nozzle assembly (10').

5. An arrangement according to any of the preceding claims, characterized in that in the vicinity of the nozzle orifices (14'), the nozzle assembly (10') presents a wall surface (10a') of substantially rotational-symmetric configuration having a centrally located pointed part (10b') being effective to deflect the boundary layer (31a), in the form of an air curtain adjacent the wall surface (10a'), along the centre line (10") of the nozzle assembly (10').

6. An arrangement according to Claim 5, characterized in that a casing (32) provided with an opening is arranged to encircle the nozzle assembly (10') in a manner to form a slot (30) between the inner surface of the casing (32) and outer surface (10a') of the nozzle assembly (10').

7. An arrangement according to Claim 2 or 6, characterized in that the slot (30) has a width within the range of 2-10 mm, preferably within the range of 3-6 mm. ·

8. An arrangement according to Claim 2, 4, 6 or 7, characterized in that the distance between the slot (30) and the nearest part of the nozzles (16) lies within the range of 5-50 mm, preferably within the range of 10-30 mm.

9. An arrangement according to Claim 1 or 2, characterized in that the means (32) is arranged so as to create the boundary layer, in the form of a gas or air curtain, with a velocity within the range of 10-150 m/s, preferably within the range of 50-100 m/s.

## Patentansprüche

1. Kontaktreaktoranordnung (6), mit
   (a) einer Kontaktreaktorkammer (6'),
   (b) einer Medien-Mischdüsenanordnung (10') oder einer Anzahl derselben, die in der Kontaktreaktorkammer (6') verteilt sind, wobei jede Düsenanordnung (10') eine Mehrzahl Düsen aufweist,
   (c) einem Kammereinlaß (5a) durch welchen ein mit gasförmigen Verunreinigungen beladenes Medium in die Kammer (6') eingeführt wird, und
   (d) einem Auslaß (6a), durch welchen gereinigtes Medium die Kammer verläßt,
die wirksam ist, um ein erstes Medium (11'), in Form eines Gases oder eines Gasgemisches, mit einem zweiten Medium (13') in Form einer Flüssigkeit/Absorptionsmittel-Suspension, miteinander zu mischen, und das erhaltene Medienengemisch in die Kammer (6') über die Düsen (16) in Form von Strahlen des Mediums (19) eingeführt wird, und dort in Kontakt mit dem verunreinigten Medium gebracht wird, dadurch gekennzeichnet, daß jede Düsenanordnung (10') in der Nachbarschaft der Austrittsöffnungen (14') der Düsen (16) mit einer Vorrichtung (32) versehen ist, die derart angeordnet ist, daß sie um die Düsenanordnung (10') eine konvergierende Begrenzungsschicht (31a) bildet, indem längs einer Wandfläche (10a') ein Gas — oder Luftstrahl und/oder — Vorhang gebildet wird, der einen gegen die Mittellinie (10") der gesamten Düsenanordnung (10') gerichteten Geschwindigkeitsvektor aufweist, und der den jeweiligen Strahl des Mediums (19) innerhalb eines Winkelbereichs von 60-120°, vorzugsweise innerhalb 80-100°, zwischen der Mittellinie (19') des jeweiligen Strahls des Mediums und dem vorherrschenden Geschwindigkeitsvektors der Begrenzungsschicht (31a) schneidet, so daß ein Rezirkulieren des Strahls des Mediums zurück zur Wandoberfläche (10a') der Düsenanordnung (10') vollständig oder teilweise verhindert wird.

2. Anordnung nach Anspruch 1, dadurch gekennzeichnet, daß die Vorrichtung (32) einen Schlitz (30) aufweist, der in der Nachbarschaft zu allen Düsen (16) in der jeweiligen Düsenanordnung (10') aber ausserhalb derselben liegt und daß die Düsen (16) in der Düsenanordnung (10') kreisförmig oder im wesentlichen kreisförmig verteilt sind, und im wesentlichen gleiche Abstände zur Mittellinie (10") der Düsenanordnung (10') haben.

3. Anordnung nach Anspruch 2, dadurch gekennzeichnet, daß die Düsen (16) in der jeweiligen Düsenanordnung (10') zwischen sich im wesentlichen gleichen Abstand aufweisen.

4. Anordnung nach Anspruch 2, dadurch gekennzeichnet, daß der Schlitz (30) kreisförmig ist und einen Durchmesser hat, der nur geringfügig größer als der Durchmesser einer Kreislinie ist, die durch den Teil der Düsen (16) hindurchtritt, der den größten Abstand zur Mittellinie (10") der Düsenanordnung (10') hat.

5. Anordnung nach einem der vorausgehenden Ansprüche, dadurch gekennzeichnet, daß in der Nachbarschaft der Düsenaustrittsöffnungen (14') die Düsenanordnung (10') eine Wandfläche (10a') mit im wesentlichen rotationssymmetrischer Ausgestaltung hat, die einen mittig angeordneten zugespitzten Teil (10b') aufweist, der wirksam ist, um die Begrenzungsschicht (31a) in Gestalt eines Luftvorhangs benachbart zur Wandfläche (10a') längs der Mittellinie (10") der Düsenanordnung (10') abzulenken.

6. Anordnung nach Anspruch 5, dadurch gekennzeichnet, daß das Gehäuse (32), das mit einer Öffnung versehen ist, so angeordnet ist, um die Düsenanordnung (10') in einer Weise zu umgeben, daß ein Schlitz (30) zwischen der Innenfläche des Gehäuses (32) und der Außenfläche (10a') der Düsenanordnung (10') gebildet wird. ·

7. Anordnung nach Anspruch 2 oder 6, dadurch gekennzeichnet, daß der Schlitz (30) eine Breite im Bereich von 2-10 mm, vorzugsweise innerhalb des Bereichs von 3-6 mm, hat.

8. Anordnung nach Anspruch 2, 4, 6 oder 7, dadurch gekennzeichnet, daß der Abstand zwischen dem Schlitz (30) und dem nächstliegenden Teil der Düsen (16) in einen Bereich von 5-50 mm und vorzugsweise innerhalb des Bereichs von 10-30 mm liegt.

9. Anordnung nach Anspruch 1 oder 2, dadurch gekennzeichnet, daß die Vorrichtung (32) derart angeordnet ist, daß sie die Begrenzungsschicht, in Form eines Gas- oder Luftvorhangs, mit einer Geschwindigkeit innerhalb des Bereichs von 10-150 m/s, und vorzugsweise innerhalb des Bereichs von 50-100 m/s erzeugt.

## Revendications

1. Dispositif dans un réacteur par contact (6), qui contient
   a) une chambre de réacteur par contact (6') ;
   b) un ou un certain nombre d'assemblages de buses de mélange de fluides (10') distribués dans la chambre (6') ; chaque assemblage de buses (10') ayant un certain nombre de buses ;
   c) une entrée de chambre (5a) à travers laquelle un fluide chargé de contaminants gazeux est introduit dans la chambre (6') ;
   d) une sortie (6a) à travers laquelle le fluide nettoyé quitte la chambre ;

étant efficace pour mélanger un premier fluide (11') sous la forme d'un gaz ou d'un mélange de gaz, à un second fluide (13') sous la forme d'une suspension absorbant/liquide et le mélange résultant de fluides étant introduit dans la chambre (6') à travers les buses (16), sous la forme de jets de fluide (19) puis porté en contact avec le fluide contaminé, caractérisé en ce que chaque assemblage de buses (10') est pourvu, à proximité des orifices de sortie (14') de buse (16), d'un moyen (32) qui est agencé pour créer une couche limite convergente (31a) autour dudit assemblage de buses (10') en dirigeant, le long d'une surface de paroi (10a'), un jet de gaz ou d'air et/ou rideau ayant un vecteur de vitesse dirigé vers un axe (10") de l'assemblage complet de buses (10') et coupant le jet respectif du fluide (19) dans une plage angulaire de 60-120°, de préférence de 80-100° entre l'axe (19') du jet respectif du fluide et le vecteur de vitesse qui règne de la couche limite (31a), pour qu'ainsi un recyclage dudit jet de fluide vers la surface de paroi (10a') de l'assemblage de buses (10') soit totalement ou partiellement empêché.

2. Dispositif selon la revendication 1, caractérisé en ce que le moyen (32) comprend une fente (30) placée adjacente à mais à l'extérieur de toutes les buses (16) dans l'assemblage respectif de buses (10') et en ce que les buses (16) dans l'assemblage de buses (10') sont distribuées en cercle ou sensiblement en cercle, avec des distances sensiblement égales par rapport à l'axe (10") de l'assemblage de buses (10').

3. Dispositif selon la revendication 2, caractérisé en ce que les buses (16) dans l'assemblage respectif de buses (10') sont espacées de distances sensiblement égales entre elles.

4. Dispositif selon la revendication 2, caractérisé en ce que la fente est circulaire et a un diamètre qui n'est que légèrement plus grand que le diamètre d'une ligne circulaire passant par la partie des buses (16) qui se trouve à la plus grande distance de l'axe (10") de l'assemblage de buses (10').

5. Dispositif selon l'une quelconque des revendications précédentes, caractérisé en ce qu'à proximité des orifices de buse (14'), l'assemblage de buses (10') présente une surface de paroi (10a') de configuration sensiblement symétrique en rotation, ayant une partie pointue placée au centre (10b') qui sert à dévier la couche limite (31a), sous la forme d'un rideau d'air, à proximité de la surface de paroi (10a') le long de l'axe (10") de l'assemblage de buses (10').

6. Dispositif selon la revendication 5, caractérisé en ce qu'une enveloppe (32) pourvue d'une ouverture est agencée pour entourer l'assemblage de buses (10') de manière à former une fente (30) entre la surface interne de l'enveloppe (32) et une surface externe (10a') de l'assemblage de buses (10').

7. Dispositif selon la revendication 2 ou 6, caractérisé en ce que la fente (30) a une largeur comprise entre 2 et 10 mm, de préférence entre 3 et 6 mm.

8. Dispositif selon la revendication 2, 4, 6 ou 7, caractérisé en ce que la distance entre la fente (30) et la partie la plus proche des buses (16) est comprise entre 5 et 50 mm, de préférence entre 10 et 30 mm.

9. Dispositif selon la revendication 1 ou 2, caractérisé en ce que le moyen (32) est agencé afin de créer la couche limite, sous la forme d'un rideau de gaz ou d'air, à une vitesse comprise entre 10 et 150 m/s, de préférence entre 50 et 100 m/s.

_FIG 1._

_FIG 2._

1

_Fig. 3_

_Fig. 4_

_Fig. 5_